# EUROPEAN PATENT SPECIFICATION

(11) **EP 0 422 685 B1**
(45) Date of publication and mention of the grant of the patent: **01.02.1995**
(21) Application number: 90119696.4
(22) Date of filing: 15.10.1990
(51) Int. Cl.: G01V 8/12

(54) **Photoelectric switch**
Fotoelektrischer Schalter
Commutateur photo-électrique

(30) Priority: 13.10.1989 JP 120310/89 U
(43) Date of publication of application: 17.04.1991
(73) Proprietor: OMRON CORPORATION, Kyoto 616 (JP)
(72) Inventor: Nakamura, Arata, c/o Intellectual Prop. Center, Nagaokakyo-shi, Kyoto 617 (JP); Shimokawa, Satoru, c/o Intellectual Prop. Center, Nagaokakyo-shi, Kyoto 617 (JP)
(74) Representative: WILHELMS, KILIAN & PARTNER Patentanwälte

(56) References cited:
- EP-A- 0 005 853
- FR-A- 2 622 978
- US-A- 3 535 539

## Description

The present invention relates to a so-called transmissive-type photoelectric switch composed of a light-projecting unit and a light-receiving unit, the light-receiving unit being installed away from the light-projecting unit so as to receive light projected by the light-projecting unit.

In a transmissive-type photoelectric switch composed of a light-projecting unit and a light-receiving unit, light projected from a light-emitting element of the light-projecting unit is received by a light-receiving element of the light-receiving unit and a signal representing a presence of an object is generated when the projected light is shut off by the object. To accurately detect an object, it is indispensable to install the light-projecting unit and light-receiving unit so as to be aligned with and opposed to each other. In the prior-art light-receiving unit, therefore, at least a part of a top board of the unit body is formed by a transparent plate and further an operation display lamp (a light-emitting element) is arranged inside this transparent plate so as to be turned on only when the light-receiving element receives the projected light. Accordingly, it is possible to install the light-projecting unit and the light-receiving units at two accurate opposing positions, respectively by visually confirming the turn-on status of the operation display lamp, whenever the light-projecting unit and the light-receiving unit are aligned with each other.

However, since the display lamp is arranged on the top board of the unit body in such a way that the display lamp emits light toward a direction perpendicular to the optical axis of the light projected from the light-projecting unit, the turn-on status of the operation display lamp can be checked mainly on the side of the light-receiving unit. Accordingly, when the distance between the light-projecting unit and the light-receiving unit is relatively short, it is possible to check the turn-on status of the operation display lamp from the side of the light-projecting unit. However, when the distance between the two units is long, there exists a problem in that it is difficult to check the turn-on status of the operation display lamp on the side of the light-projecting unit.

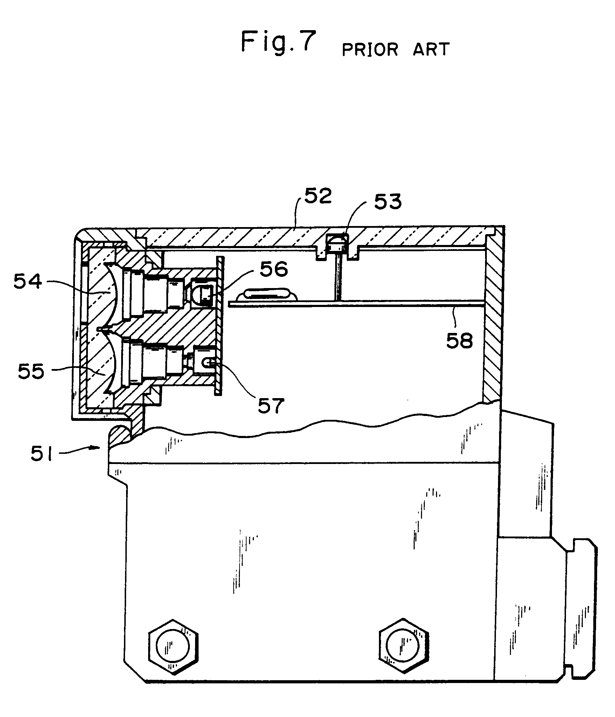

To overcome the above-mentioned problem, the same applicant has already proposed a light-receiving unit as shown in Fig.7, by which it is possible to readily confirm the optical axis alignment condition on the light-projecting unit side, even if the distance between the light-projecting unit and the light-receiving unit is relatively long.

In the prior-art light-receiving unit shown in Fig.7, the top board of a unit body 51 is formed of a transparent plate 52; a first operation display lamp (a light-emitting element) 53 is arranged inside of the transparent plate 52; an aperture is formed at a front end portion of the unit body 51; and a first convex lens 54 and a second convex lens 55 are mounted in the aperture. A light-receiving element 56 is located at a focus position of the first lens 54 and a second operation display lamp (light-emitting element) 57 is located at a focus position of the second lens 55. Further, a circuit board 58 on which various electronic parts are mounted is fixed within the unit body 51. The light-receiving element 56, the first operation display lamp 53 and the second operation display lamp 57 are all electrically connected to this circuit board 58.

In the above-mentioned light-receiving unit, when the light-receiving element 56 of the light-receiving unit receives light projected from the light-projecting unit, both the first operation display lamp 53 and the second operation display lamp 57 turn on simultaneously owing to the operation of electric circuits provided on the circuit board 58. The first operation display lamp 53 emits light in the direction perpendicular to the optical axis of the light projected from the light-projecting unit, and the second operation display lamp 57 emits light directly toward the light-projecting unit. Therefore, when the optical axis alignment is performed by moving the light-receiving unit relative to the fixed light-projecting unit, the optical axis alignment can be confirmed on the basis of the first operation display lamp 53. On the other hand, when the optical axis alignment is performed by moving the light-projecting unit relative to the fixed light-receiving unit, the optical axis alignment can be confirmed on the basis of the second operation display lamp 57, even if the distance between the light-projecting unit and the light-receiving unit is long.

In the above-mentioned light-receiving unit (as shown in Fig.7) of the transmissive-type photoelectric switch proposed by the same applicant, since the second operation display lamp is additionally provided, there exists an advantage such that it is possible to easily confirm the optical axis alignment on the light-projecting unit side, even if the distance between the two opposing units is relatively long.

In this prior-art light-receiving unit of the transmissive-type photoelectric switch, however, there exists a disadvantage such that not only two operation display lamps (light emitting elements) are required, but also a complicated and high costly driving circuits are necessary.

A photoelectric switch according to the preamble of claim 1 is known from FR-A-2 622 978, US-A-3 535 539, EP-A- 0 005 853. According to these known devices, the mirror is arranged at the light-receiving unit in a manner suitable for an observation of a light beam reflected by the mirror to take place in the vicinity of the light-receiving unit.

With these problems in mind, therefore, it is the object of the present invention to provide a photoelectric switch, which can simplify the construction of the light-receiving unit and permit the optical axis alignment between the light-projecting unit and a light-receiving unit to be confirmed by visual check, even when the distance between the two units is relatively long.

To achieve the above-mentioned object, the present invention provides a photoelectric switch as defined in claim 1.

According to the present invention, reflector means is disposed in the vicinity of a focusing lens mounted on a front surface of the light-receiving unit body. The reflector means is a retroreflector composed of a plurality of corner-cube prisms, for instance. Light including visible light components and projected from a light-projecting unit is allowed to be incident upon a light receiving portion (the focusing lens and its peripheral portion) of the light-receiving unit. Part of the projected light is focused through the focusing lens and then received by a light-receiving element. A part of the remaining projected light is reflected by the reflector means toward a light-projecting unit. Therefore, when the optical axis alignment is required to be checked on the light-projecting unit side, it is possible to check whether the projected light is allowed to be correctly incident upon the light-receiving unit from the light-projecting unit side, because confirmed when the projected light correctly impinges upon the light-receiving unit. In other words, even if the distance between the light-projecting unit and the light-receiving unit is long, it is possible to align the optical axis of the light-projecting unit with that of the light-receiving unit on the light-projecting unit side. In addition, the optical axis alignment can be performed by providing the reflector means within the light-receiving unit, without complicating the structure thereof.

As described above, according to the present invention, the optical axis alignment from the light-projecting unit side can be easily confirmed on the basis of presence or absence of the light reflected from the reflector means provided on the light-receiving unit installed at such a position as to be opposed to the light-projecting unit. Therefore, it is possible to provide a low-costly transmissive-type photoelectric switch, because the two operation display lamps (light-emitting elements) and the lamp driving circuit therefor are both not required. Further, since the optimum optical axis alignment position or angle can be checked on the basis of the intensity of light reflected from the reflector means, the optical axes of the two units can be aligned with each other at the most stable positional relationship.

In the drawings:
Fig.1 is a cross-sectional view showing an embodiment of the light-receiving unit of the transmissive-type photoelectric switch according to the present invention;
Fig.2a is a front view showing a light-receiving optical part;
Fig.2b is a cross-sectional view of Fig.2a;
Fig.3a is a front view showing another light-receiving optical part;
Fig.3b is a cross-sectional view of Fig.3a;
Fig.4a is a side view showing a light-projecting unit;
Fig.4b is a side, partially broken view showing another embodiment of the light-receiving unit;
Fig.5 is a side, partially broken view showing another embodiment of the light-receiving unit;
Fig.6 is a side, partially broken view showing still another embodiment of the light-receiving unit; and
Fig.7 is a side, partially broken view showing a prior-art light-receiving unit of the transmissive-type photoelectric switch.

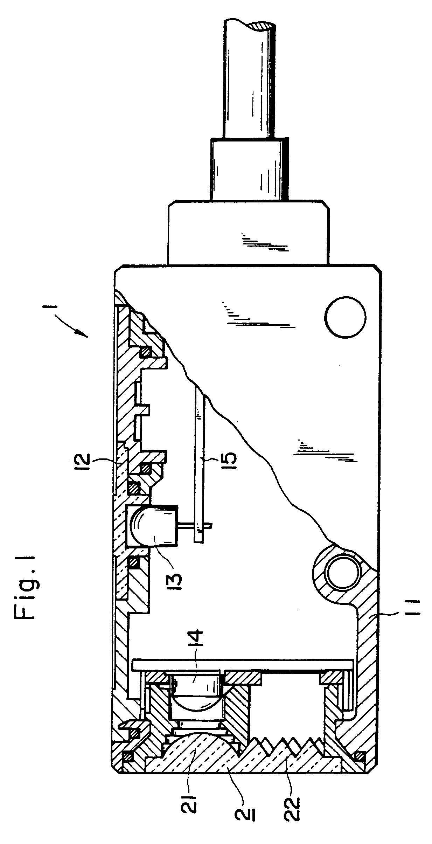

Fig.1 is a cross-sectional view showing an embodiment of the light-receiving unit of the photoelectric switch according to the present invention.

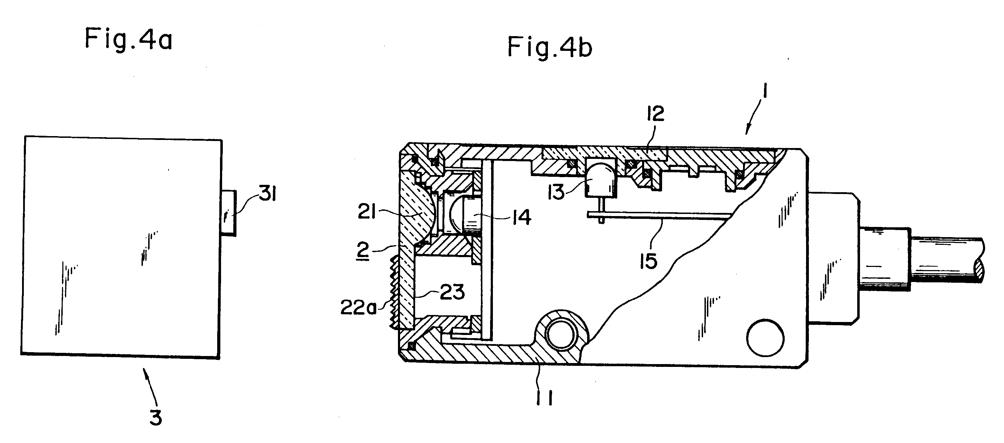

A transmissive-type photoelectric switch is generally composed of a light-receiving unit 1 and a light-projecting unit 3, as shown in Figs.4a and 4b, as described in further detail hereinbelow. The light-receiving unit 1 and the light-projecting unit 3 are opposingly installed an appropriate distance apart from each other. Light projected from a light-emitting element 31 of the light-projecting unit 3 is always received by the light-receiving unit 1. The presence of a moving object can be detected when the projected light is shut off by the object moving through between the two units 1 and 3.

In Fig.1, the light-receiving unit 1 includes a unit body 11 formed with an upper surface wall including a transparent plate 12 and an operation display lamp (light-emitting element) 13 attached to the inner surface of the transparent plate 12. Further, the unit body 11 is formed with an aperture on the front surface thereof and a light-receiving optical part 2 including a convex condenser (focusing) lens 21 and a reflector 22 together is fitted to this aperture. A light-receiving element (phototransistor) 14 is located at a focus position of the condenser lens 21. The light-receiving element 14 and the operation display lamp (light-emitting diode) 13 are both electrically connected to a circuit board 15 on which various electronic parts are mounted, so that the operation display lamp 13 is turned on when the light-receiving element 14 receives the light projected from the light-emitting element 31 of the light-projecting unit 3 due to the operation of an electric circuit provided on the circuit board 15.

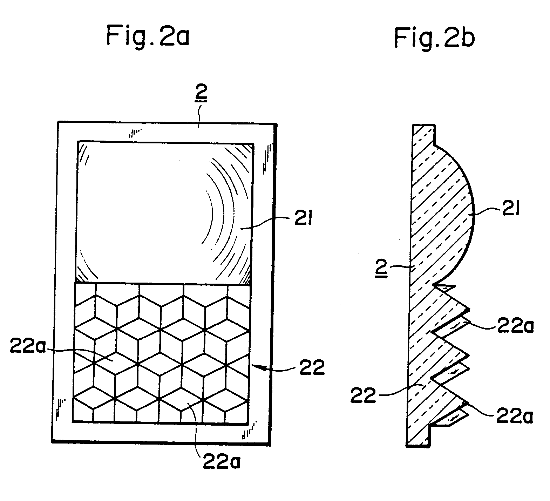

Fig.2a is an enlarged front view showing the light-receiving optical part (system) 2, and Fig.2b is a cross-sectional view showing the same. The light-receiving optical part 2 includes the condenser lens 21 and the reflector 22 formed integral with each other. The condenser lens 21 is formed on the upper half side and the reflector 22 is formed on the lower half side in this embodiment shown. As depicted in Fig.2b, the condenser lens 21 is a convex lens, and the reflector 22 is a retroreflecting plate (reflex-reflector) comprising a plurality of corner-cubes (reflecting elements) 22a so arranged that three reflecting plates of each corner-cube are placed at right angles with respect to each other. This reflector 22 reflects part of visible light projected by the light-projecting unit 3 toward the light-projecting unit 3.

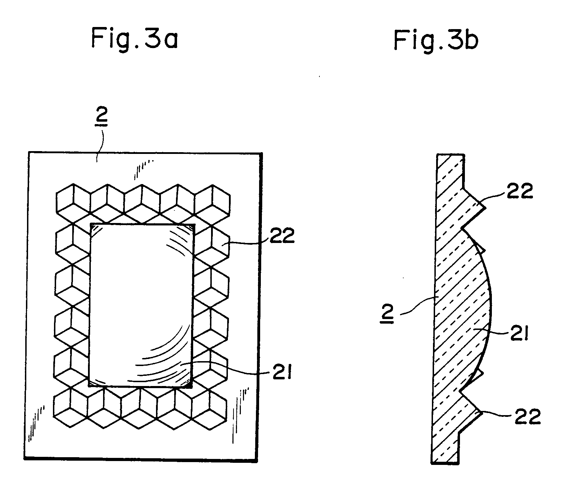

Fig.3a is an enlarged front view showing another embodiment of the light-receiving optical part 2, and Fig.3b is a cross-sectional view showing the same. In this embodiment, the condenser lens 21 is formed at the central portion thereof and the reflector (the retroreflector plate) 22 is arranged outside the condenser lens 21 so as to surround the condenser lens 21. In this embodiment, it is possible to more accurately reflect the projected light toward the light-projecting unit 3.

Figs.4a and 4b show another embodiment of the light-receiving unit 1. In this embodiment, the condenser lens and the reflector are arranged separately from each other, being different from the embodiment shown in Fig.1 in which the condenser lens 21 and the reflector 22 are formed integral with each other. In more detail, the light-receiving optical part 2 includes an upper condenser lens 21, a lower transparent plate 23, and a tape-shaped reflector (retroreflector) 22a removably bonded onto the surface of the transparent plate 23. In this embodiment, since the retroreflector 22a can be removed easily, it is possible to readily replace an old or broken retroreflector 22a with a new one.

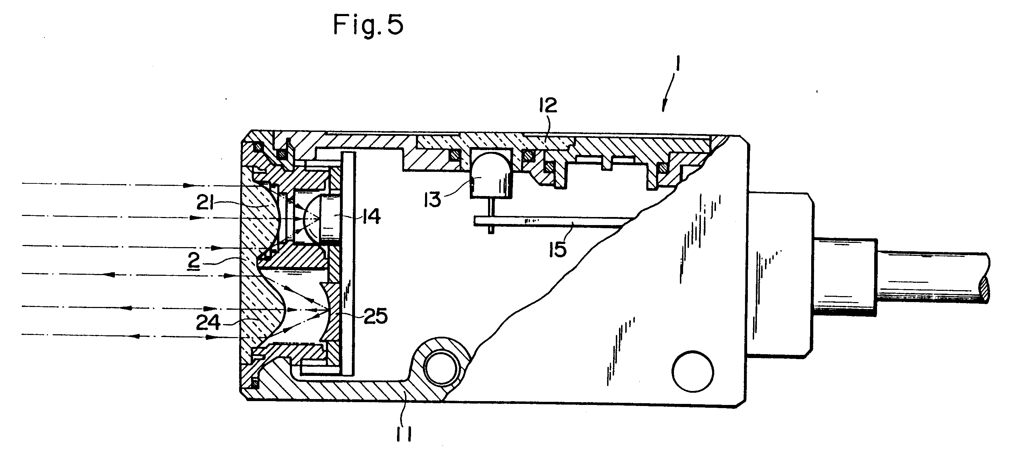

Fig.5 is a cross-sectional view showing a still another embodiment of the light-receiving unit 1. In this embodiment, the reflector part is composed of a condenser lens 24 and a concave mirror 25. In more detail, the light-receiving optical part 2 includes a condenser lens 21 and a convex condenser lens 24 formed integral with each other. A light-receiving element 14 is located at the focus position of the condenser lens 21, and the concave mirror 25 is located at the focus position of the convex condenser lens 24. The retroreflective reflector is composed of the convex condenser lens 24 and the concave mirror 25 to reflect part of the visible light projected from the light-projecting unit 3 by the concave mirror 25, and further to return a beam collimated through the convex condenser lens 24 toward the light-projecting unit 3.

In this embodiment, it is possible to use a twin-lens optical system for a so-called reflective-type photoelectric switch as the light-receiving optical part (reflector) 2 without any modification. Therefore, it is possible to construct a low-costly retroreflective reflector without preparing new additional members or parts.

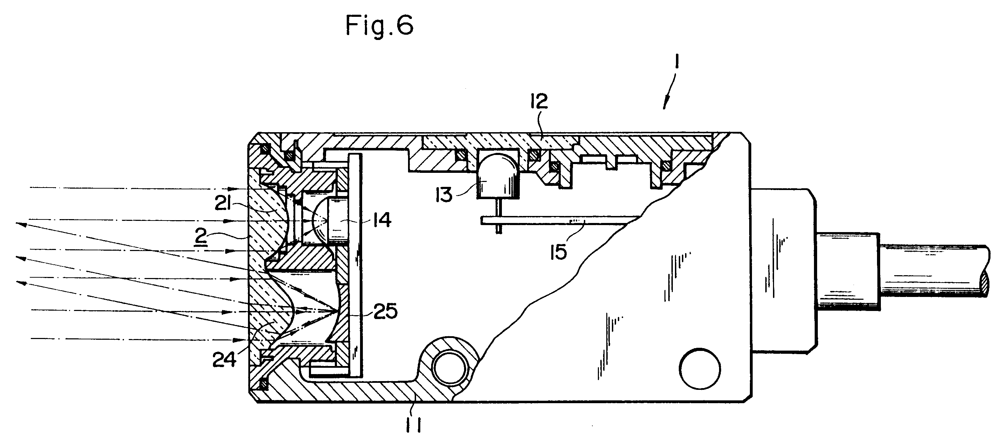

Fig.6 is a cross-sectional view showing still another embodiment of the light-receiving unit 1.

The reflector of this embodiment is the same as the above-mentioned embodiment shown in Fig.5 in that the retroreflective reflector is composed of the convex condenser lens 24 and the concave mirror 25. In this embodiment, however, the concave mirror 25 is formed or arranged in such a way that the optical axis thereof is a little tilted with respect to that of the condenser lens 24. Therefore, the light incident upon the convex condenser lens 24 is reflected by a concave mirror 25, and then projected as a collimated beam through the convex condenser lens 24 obliquely upward with respect to the light incident upon the convex condenser lens 24. Therefore, since the reflected light can be confirmed visually from behind and a little upward away from the light-projecting unit 3, there exists an advantage such that the reflected light can be more easily confirmed on the light-projecting unit side. Since any given reflection directivity can be obtained by freely determining the radius of curvature or the tilt angle of the concave mirror 25, it is possible to eliminate a harmful influence of parallax (between the light-projecting unit and the worker) upon the visual confirmation of the reflected light, thus enabling the more accurate optical axis alignment work.

In the transmissive-type photoelectric switch as described above, when the optical axis alignment is performed by adjustably moving the light-receiving unit 1 relative to the fixed light-projecting unit 3, the optical axis alignment can be confirmed on the basis of the turn-on status of the operation display lamp 13 as is conventional. In contrast, when the optical axis alignment is made by adjustably moving the light-projecting unit 3 relative to the fixed light-receiving unit 1, the reflector (i.e. retroreflector plate 22) disposed so as to be opposed to the light-projecting unit 3 is utilized. That is, the visible light beam projected from the light-projecting unit 3 is allowed to impinge upon the light-receiving optical part 2 of the light-receiving unit 1. Under these conditions, part of the projected visible light is focused through the condenser lens 21 of the light-receiving optical part 2 and then allowed to be incident upon the light-receiving element 14. At the same time, part of the projected light is reflected by the retroreflector 22 toward the light-projecting unit 3. Therefore, it is possible to confirm the light reflected by the retroreflector 22, when the projected visible light is allowed to impinge upon the optical light-receiving optical part 2, by seeing the light-receiving unit 1 from behind the light-projecting unit 3 installed a long distance away from the light-receiving unit 1. On the other hand, when the projected visible light is not allowed to impinge upon the light-receiving optical part 2, there exists no light reflected from the retroreflector 22. Therefore, it is possible to check whether the light projected from the light-projecting unit 3 is correctly allowed to be incident upon the light-receiving optical part 2 on the light-projecting unit side. Further, in this case, it is possible to achieve the optimum optical axis alignment work, by aligning the axis of the light-projecting unit 3 with that of the light-receiving unit 1 so that the intensity of the light reflected by the retroreflector 22 becomes the maximum value.

## Claims

1. A photoelectric switch comprising a light-projecting unit (3) for projecting light and a light-receiving unit (1) installable remote from said light-projecting unit so as to receive the light projected by said light-projecting unit, said light-receiving unit including a focusing lens (21) disposed on a front surface of a unit body (11) of said light-receiving unit, a light-receiving element (14) disposed at a focus position of said focusing lens, and a reflector means (22, 22a, 24, 25), characterized in that said reflector means (22, 22a, 24, 25) is disposed on the front surface of the unit body of said light-receiving unit in the vicinity of said focusing lens, for reflecting part of the light projected from said light-projecting unit including a visible light component towards said light-projecting unit so that the reflected light can be seen at the side of said light-projecting unit for confirmation of optical axis alignment.

2. A photoelectric switch according to claim 1, characterized in that said reflector means (22, 22a) is so arranged that the light reflected by said reflector means propagates in a direction parallel to an optical axis of the light projected by said light-projecting unit (3).

3. A photoelectric switch according to claim 1, characterized in that said reflector means (22, 22a) is so arranged that the reflecting surface of said reflector means is perpendicular to an optical axis of the light projected by said light-projecting unit (3).

4. A photoelectric switch according to claim 1, characterized in that said reflector means (22, 22a, 24, 25) is disposed adjoining to said focusing lens (21).

5. A photoelectric switch according to claim 1, characterized in that said reflector means (22) is disposed around said focusing lens (21).

6. A photoelectric switch according to claim 1, characterized in that said reflector means is a retroreflector (22).

7. A photoelectric switch according to claim 1, characterized in that said reflector means (22, 22a) is removably disposed.

8. A photoelectric switch according to claim 1, characterized in that said reflector means comprises a focusing lens and a concave mirror (25) disposed at a focus position of said focusing lens (24).

9. A photoelectric switch according to claim 8, characterized in that said concave mirror (25) is disposed in such a way that an optical axis thereof is slightly tilted with respect to an optical axis of the light beam projected from said light-projecting unit (3).

## Patentansprüche

1. Photoelektrischer Schalter mit einer Lichteinstrahleinheit (3) zum Einstrahlen von Licht und einer Lichtempfängereinheit (1), die entfernt von der Lichteinstrahleinheit so angebracht werden kann, daß sie das von der Lichteinstrahleinheit eingestrahlte Licht empfängt, wobei die Lichtempfängereinheit eine Fokussierungslinse (21), die an einer Vorderfläche eines Einheitenkörpers (11) der Lichtempfängereinheit angeordnet ist, ein Lichtempfängerelement (14), welches an einer Fokussierungsposition der Fokussierungslinse angeordnet ist, und Reflektormittel (22, 22a, 24, 25) enthält, dadurch gekennzeichnet, daß die Reflektormittel (22, 22a, 24, 25) an der Vorderfläche des Einheitenkörpers der Lichtempfängereinheit benachbart zur Fokussierungslinse für ein Reflektieren eines Teils des von der Lichteinstrahleinheit eingestrahlten Lichts einschließlich einer sichtbaren Komponente in Richtung auf die Lichteinstrahleinheit angeordnet sind, so daß das reflektierte Licht auf der Seite der Lichteinstrahleinheit zur Bestätigung der Ausrichtung der optischen Achse gesehen werden kann.

2. Photoelektrischer Schalter nach Anspruch 1, dadurch gekennzeichnet, daß die Reflektormittel (22, 22a) so angeordnet sind, daß das von den Reflektormitteln reflektierte Licht sich in einer Richtung parallel zu einer optischen Achse des durch die Lichteinstrahleinheit (3) eingestrahlten Lichts ausbreitet.

3. Photoelektrischer Schalter nach Anspruch 1, dadurch gekennzeichnet, daß die Reflektormittel (22, 22a) so angeordnet sind, daß die reflektierende Oberfläche der Reflektormittel senkrecht zu einer optischen Achse des von der Lichteinstrahleinheit (3) eingestrahlten Lichts liegt.

4. Photoelektrischer Schalter nach Anspruch 1, dadurch gekennzeichnet, daß die Reflektormittel (22, 22a, 24, 25) angrenzend an die Fokussierungslinse (21) angeordnet sind.

5. Photoelektrischer Schalter nach Anspruch 1, dadurch gekennzeichnet, daß die Reflektormittel (22) um die Fokussierungslinse (21) herum angeordnet sind.

6. Photoelektrischer Schalter nach Anspruch 1, dadurch gekennzeichnet, daß die Reflektormittel ein Retroreflektor (22) sind.

7. Photoelektrischer Schalter nach Anspruch 1, dadurch gekennzeichnet, daß die Reflektormittel (22, 22a) abnehmbar angeordnet sind.

8. Photoelektrischer Schalter nach Anspruch 1, dadurch gekennzeichnet, daß die Reflektormittel eine Fokussierungslinse und einen Konkavspiegel (25) aufweisen, der an einer Fokussierungsposition der Fokussierungslinse (24) angeordnet ist.

9. Photoelektrischer Schalter nach Anspruch 8, dadurch gekennzeichnet, daß der Konkavspiegel (25) in einer solchen Weise angeordnet ist, daß eine optische Achse desselben leicht in Bezug auf eine optische Achse des von der Lichteinstrahlereinheit (3) eingestrahlten Lichtbündels geneigt ist.

## Revendications

1. Interrupteur photo-électrique comprenant un dispositif de projection de lumière (3) pour projeter de la lumière et un dispositif de réception de lumière (1) pouvant être installé à distance dudit dispositif de projection de lumière de façon à recevoir la lumière projetée par ledit dispositif de projection de lumière, ledit dispositif de réception de lumière incluant une lentille de focalisation (21) disposée sur une surface avant d'un corps (11) dudit dispositif de réception de lumière, un élément de réception de lumière (14) disposé à une position de foyer de ladite lentille de focalisation, et un moyen réflecteur (22, 22a, 24, 25), caractérisé en ce que ledit moyen réflecteur (22, 22a, 24, 25) est disposé sur la surface avant du corps dudit dispositif de réception de lumière à proximité de ladite lentille de focalisation, pour réfléchir une partie de la lumière projetée par ledit dispositif de projection de lumière et incluant une composante de lumière visible, en direction dudit dispositif de projection de lumière de façon à ce que la lumière réfléchie soit visible à côté dudit dispositif de projection de lumière afin de confirmer un alignement d'axe optique.

2. Interrupteur photo-électrique selon la revendication 1, caractérisé en ce que ledit moyen réflecteur (22, 22a) est prévu de telle manière que la lumière réfléchie par ledit moyen réflecteur se propage dans une direction parallèle à un axe optique de la lumière projetée par ledit dispositif de projection de lumière (3).

3. Interrupteur photo-électrique selon la revendication 1, caractérisé en ce que ledit moyen réflecteur (22, 22a) est prévu de telle manière que la surface de réflexion dudit moyen réflecteur est perpendiculaire à un axe optique de la lumière projetée par ledit dispositif de projection de lumière (3).

4. Interrupteur photo-électrique selon la revendication 1, caractérisé en ce que ledit moyen réflecteur (22, 22a, 24, 25) est disposé de façon contiguë à ladite lentille de focalisation (21).

5. Interrupteur photo-électrique selon la revendication 1, caractérisé en ce que ledit moyen réflecteur (22) est disposé autour de ladite lentille de focalisation (21).

6. Interrupteur photo-électrique selon la revendication 1, caractérisé en ce que ledit moyen réflecteur est constitué par un rétroréflecteur (22).

7. Interrupteur photo-électrique selon la revendication 1, caractérisé en ce que ledit moyen réflecteur (22, 22a) est disposé de façon amovible.

8. Interrupteur photo-électrique selon la revendication 1, caractérisé en ce que ledit moyen réflecteur comprend une lentille de focalisation et un miroir concave (25) disposé à une position de foyer de ladite lentille de focalisation (24).

9. Interrupteur photo-électrique selon la revendication 8, caractérisé en ce que ledit miroir concave (25) est disposé de manière telle à avoir un axe optique légèrement incliné par rapport à un axe optique du faisceau de lumière projeté par ledit dispositif de projection de lumière (3).
